# EUROPÄISCHE PATENTSCHRIFT

(11) **EP 1 888 385 B1**
(45) Veröffentlichungstag und Bekanntmachung des Hinweises auf die Patenterteilung: **10.09.2008**
(21) Anmeldenummer: 06743130.4
(22) Anmeldetag: 08.06.2006
(51) Int. Cl.: B60T 8/48

(54) **HYDRAULISCHE BREMSANLAGE FÜR EIN LANDFAHRZEUG**
HYDRAULIC BRAKE SYSTEM FOR A LAND CRAFT
SYSTEME DE FREINAGE HYDRAULIQUE POUR VEHICULE TERRESTRE

(30) Priorität: 09.06.2005 DE 102005026735
(43) Veröffentlichungstag der Anmeldung: 20.02.2008
(73) Patentinhaber: Lucas Automotive GmbH, 56070 Koblenz (DE)
(72) Erfinder: BACH, Thomas, 56332 Wolken (DE); THELEN, Harald, 56332 Oberfell (DE); KNECHTGES, Josef, 56727 Mayen (DE); SCHMITT, Bernd, 56567 Neuwied (DE); CHEMNITZ, Christian, 56566 Neuwied (DE); HELLER, Frank, 56154 Boppard (DE)
(74) Vertreter: Schmidt, Steffen
(86) Internationale Anmeldenummer: PCT/EP2006/005492
(87) Internationale Veröffentlichungsnummer: WO 2006/131367

(56) Entgegenhaltungen:
- EP-A- 0 965 509
- WO-A-03/018379

## Beschreibung

### Hintergrund der Erfindung

Die Erfindung betrifft eine hydraulische Bremsanlage für ein Landfahrzeug mit einem vom Fahrer durch ein Pedal direkt oder über einen dem Pedal nachgeschalteten Bremskraftverstärker zu betätigenden Hauptzylinder zum Erzeugen von Bremsdruck in zwei Bremskreisen, von denen jeder zwei Radbremsen aufweist. Dabei ist zwischen dem Hauptzylinder und den Radbremsen durch Ventilanordnungen in Abhängigkeit von Ansteuersignalen aus einer elektronischen Steuerung eine hydraulische Verbindung herzustellen oder zu sperren, um vom Fahrer direkt bewirkte Normalbremsungen oder durch die elektronische Steuerung beeinflusste Bremsungen in Abhängigkeit von der elektronischen Steuerung zugeführten, das Fahrzeugverhalten und/oder den Fahrerwunsch wiedergebenden Messgrößen auszuführen, indem der Bremsdruckverlauf in den Radbremsen durch Ansteuern der ihnen zugeordneten Ventilanordnungen verändert wird.

Derartige hydraulische Bremsanlagen sind in der Lage und dazu bestimmt, automatische Bremsungen auszuführen. Darunter sind Bremsvorgänge verstanden, die in der Regel unabhängig von einer vom Fahrer am Pedal eingeleiteten Kraft erfolgen. Solche sind z.B. eine Antriebsschlupfregelung (ASR), die ein Durchdrehen einzelner Räder bei einem Anfahrvorgang durch gezieltes Abbremsen verhindert, oder eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die unter anderem durch selbsttätiges Bremsen einen vorgegebenen Abstand des eigenen Fahrzeugs zu einem vorausfahrenden Fahrzeug einhält.

Solche automatischen Bremsungen, die, hervorgerufen durch entsprechende Eingangsgrößen (Raddrehzahlen bzw. Fahrzeuggeschwindigkeit, oder dergl.) mit niedrigen Bremsdruckniveau abzulaufen haben, sind besonders anfällig dafür, dass ein Fahrer ein Rucken und/oder Schiefziehen des Fahrzeugs bemerkt. Dies ist zum Beispiel bei ACC-Bremseingriffen der Fall. Diese Situationen machen erforderlich, dass während der Bremsung in beiden Bremskreisen I, II nahezu die gleichen Bremsdruckniveaus herrschen, um zu verhindern, dass ein derartiges Rucken und/oder Schiefziehen des Fahrzeugs auftritt.

Die WO 03/018379 A1 betrifft ein hydraulisches Bremssystem zum Beeinflussen eines hydraulischen Bremssystems. Das Bremssystem hat einen Hauptbremszylinder und mindestens zwei Bremskreise, die mit dem Hauptbremszylinder hydraulisch verbunden sind, Magnetventile, die den Bremskreisen individuell zugeordnet sind, und Mittel zum Ansteuern der Magnetventile, wodurch der hydraulische Druck in den Bremskreisen moduliert wird. Den Magnetventilen werden dabei radindividuelle oder bremskreisspezifische Ansteuerungen zugeführt.

Eine radindividuelle Ansteuerung ist hier durch die radindividuelle Ansteuerung der Ein- und Auslassventile zu erreichen. Eine bremskreisspezifische Ansteuerung ist durch die bremskreisspezifische Ansteuerung der Umschaltventile, der Hochdruckschaltventile oder der Rückförderpumpen im jeweiligen Bremskreis zu erreichen.

Das - der Erfindung zugrunde liegende - Problem ist, dass bei automatischen Bremsungen die beiden Bremskreise voneinander hydraulisch entkoppelt sind, so dass ein Druckausgleich zwischen ihnen nicht stattfinden kann.

Die erfindungsgemäße Lösung sieht nun vor, dass die elektronische Steuerung dazu eingerichtet und programmiert ist, für das Einstellen eines für ein bestimmtes Fahrzeugverhalten erforderlichen Bremsdruckverlaufes Ansteuersignale bereitzustellen, durch die das Einstellen eines jeweiligen Bremsdruckverlaufs in den beiden Bremskreisen in vordefinierten Druckstufen zeitlich um eine im Wesentlichen vordefinierte Zeitstufe versetzt ist.

Damit wird der überraschende Effekt erzielt, dass die kleinste reproduzierbar einstellbare Druckstufe im Gesamt-Bremsdruckverlauf kleiner ist, als wenn für beide Bremskreise synchron der Druckverlauf verändert würde. Somit sind schwache Bremseingriffe feiner dosierbar und eventuelle Asymmetrien für den Fahrer nicht so ohne weiteres feststellbar. Damit ist es möglich, den Umstand zumindest teilweise zu kompensieren, dass die beiden Bremskreise bei automatischen Bremsungen nicht hydraulisch gekoppelt sind.

Vorzugsweise ist eine durch die elektronische Steuerung über ein Ansteuersignal betätigbare Pumpe zum Erhöhen und/oder zum Erniedrigen des Bremsdruckes in den Radbremsen vorgesehen, die eventuell ihre Fördermenge in Abhängigkeit von dem Ansteuersignal ändern kann.

Ferner kann ein Elektromotor vorgesehen sein, der die Pumpen beider Bremskreise gleichzeitig betätigt.

Bei einer vorteilhaften Ausführungsform ist die elektronische Steuerung dazu eingerichtet und programmiert, für das Einstellen eines Bremsdruckverlaufes Ansteuersignale bereitzustellen, durch die ausgehend von einem Ausgangswert zu einem Start-Zeitpunkt in einem der Bremskreise der Bremsdruck um eine Druckstufe auf einen ersten Wert steigt und nach dessen Erreichen dieser Bremsdruck für die Dauer einer Zeitstufe bis zu einem zweiten Zeitpunkt im Wesentlichen konstant bleibt.

Dabei kann die elektronische Steuerung ferner dazu eingerichtet und programmiert sein, für das Einstellen eines Bremsdruckverlaufes Ansteuersignale bereitzustellen, durch die parallel zum Erhöhen des Bremsdruckes im einen Bremskreis um eine Druckstufe auf einen ersten Wert, im anderen Bremskreis der Bremsdruck ab dem Start-Zeitpunkt für die Dauer der Zeitstufe auf dem Ausgangswert im Wesentlichen konstant bleibt, und der Bremsdruck im zweiten Bremskreis zu einem ersten Zeitpunkt um eine Druckstufe auf einen ersten Wert steigt, der zu dem zweiten Zeitpunkt erreicht ist.

Des weiteren kann hierbei die elektronische Steuerung dazu eingerichtet und programmiert sein, die abwechselnden Druckanstiegs- und Druckhaltephasen zwischen den beiden Bremskreisen ab dem zweiten Zeitpunkt weiter fortzusetzen.

Bei einer weiteren vorteilhaften Ausführungsform ist die elektronische Steuerung dazu eingerichtet und programmiert, für das Einstellen eines Bremsdruckverlaufes Ansteuersignale bereitzustellen, durch die ausgehend von einem Ausgangswert zu einem Start-Zeitpunkt in einem der Bremskreise der Bremsdruck um eine Druckstufe auf einen tieferen Wert sinkt und nach dessen Erreichen dieser Bremsdruck für die Dauer einer Zeitstufe bis zu einem späteren Zeitpunkt im Wesentlichen konstant bleibt.

Dabei kann die elektronische Steuerung dazu eingerichtet und programmiert sein, für das Einstellen eines Bremsdruckverlaufes Ansteuersignale bereitzustellen, durch die parallel zum Senken des Bremsdruckes im einen Bremskreis um eine Druckstufe auf einen tieferen Wert, im anderen Bremskreis der Bremsdruck ab dem Zeitpunkt für die Dauer der Zeitstufe auf dem Ausgangswert im Wesentlichen konstant bleibt, der Bremsdruck im anderen Bremskreis zu dem Zeitpunkt um eine Druckstufe auf einen tieferen Wert sinkt, der zu dem späteren Zeitpunkt erreicht ist.

Ferner kann dabei die elektronische Steuerung dazu eingerichtet und programmiert sein, die abwechselnden Druckabbau- und Druckhaltephasen zwischen den beiden Bremskreisen ab dem späteren Zeitpunkt weiter fortzusetzen.

Bei einer weiteren vorteilhaften Ausführungsform ist die elektronische Steuerung dazu eingerichtet und programmiert, für das Einstellen eines Bremsdruckverlaufes Ansteuersignale bereitzustellen, durch die ausgehend von einem Ausgangswert zu einem Ausgangs-Zeitpunkt in einem der Bremskreise der Bremsdruck um eine einleitende niederige Druckstufe auf einen ersten Wert steigt, der zu einem ersten Zeitpunkt erreicht ist, und nach dessen Erreichen dieser Bremsdruck für die Dauer einer Zeitstufe bis zu einem späteren Zeitpunkt im Wesentlichen konstant bleibt.

Dabei kann die Druckstufe ein mehrfaches, vorzugsweise zweifaches der einleitenden niedrigen Druckstufe betragen.

Ferner kann dabei die elektronische Steuerung dazu eingerichtet und programmiert sein, für das Einstellen eines Bremsdruckverlaufes Ansteuersignale bereitzustellen, durch die zum späteren Zeitpunkt im einen Bremskreis der Bremsdruck bis zu einem weiteren Zeitpunkt um eine Druckstufe auf einen höheren Wert steigt, wobei die Differenz der weiteren und späteren Zeitpunkte im Wesentlichen der Zeitstufe, und die Druckstufe im Wesentlichen einem mehrfachen, vorzugsweise zweifachen der einleitenden Druckstufe entspricht.

Bei einer vorteilhaften Weiterbildung der zuletzt genannten Ausführungsform ist die elektronische Steuerung dazu eingerichtet und programmiert, für das Einstellen eines Bremsdruckverlaufes Ansteuersignale bereitzustellen, durch die parallel zum Ansteigen des Bremsdrucks im einen Bremskreis um die einleitende niedrige Druckstufe auf einen ersten Wert und dessen Halten für die Dauer einer Zeitstufe bis zu dem späteren Zeitpunkt, der Bremsdruck im anderen Bremskreis ab dem Ausgangs- Zeitpunkt für die Dauer der einleitenden niedrigeren Zeitstufe auf dem Ausgangswert im Wesentlichen konstant bleibt, zu dem ersten Zeitpunkt um die Druckstufe auf den zweiten Wert steigt, der zu dem späteren Zeitpunkt erreicht ist, wobei die Differenz der ersten und der späteren Zeitpunkte der Dauer der Zeitstufe entspricht, und ab dem späteren Zeitpunkt der Bremsdruck im zweiten Bremskreis für die Dauer der Zeitstufe bis zu dem weiteren Zeitpunkt im Wesentlichen konstant bleibt.

Ferner kann es vorgesehen sein, dass die elektronische Steuerung dazu eingerichtet und programmiert ist, die abwechselnden Druckaufbau- und Druckhaltephasen zwischen den beiden Bremskreisen ab dem weiteren Zeitpunkt weiter fortzusetzen.

Bei einer weiteren vorteilhaften Ausführungsform ist die elektronische Steuerung dazu eingerichtet und programmiert, für das Einstellen eines Bremsdruckverlaufes Ansteuersignale bereitzustellen, durch die ausgehend von einem Ausgangswert zu einem Ausgangs-Zeitpunkt im einen Bremskreis der Bremsdruck um eine einleitende niedrige Druckstufe auf einen niedrigen Wert sinkt, der zu einem ersten Zeitpunkt erreicht ist, und nach dessen Erreichen dieser Bremsdruck für die Dauer einer Zeitstufe bis zu einem späteren Zeitpunkt im Wesentlichen konstant bleibt.

Auch hier kann die Druckstufe ein mehrfaches, vorzugsweise zweifaches der einleitenden Druckstufe dauern.

Ferner kann die elektronische Steuerung dazu eingerichtet und programmiert sein, für das Einstellen eines Bremsdruckverlaufes Ansteuersignale bereitzustellen, durch die zum späteren Zeitpunkt im einen Bremskreis der Bremsdruck bis zu einem weiteren Zeitpunkt um eine Druckstufe auf einen zweiten Wert fällt, wobei die Differenz der weiteren und späteren Zeitpunkte im Wesentlichen der Zeitstufe und die Druckstufe im Wesentlichen einem mehrfachen, vorzugsweise zweifachen der einleitenden Druckstufe entspricht.

Bei der zuletzt genannten Ausführungsform ist es ferner möglich, dass die elektronische Steuerung dazu eingerichtet und programmiert ist, für das Einstellen eines Bremsdruckverlaufes Ansteuersignale bereitzustellen, durch die parallel zum Sinken des Bremsdrucks im einen Bremskreis um die einleitende niedrige Druckstufe auf einen ersten Wert und dessen Halten für die Dauer einer Zeitstufe bis zu einem späteren Zeitpunkt, der Bremsdruck im anderen Bremskreis ab dem späteren Zeitpunkt für die Dauer der einleitenden niedrigen-Zeitstufe auf dem Ausgangswert im Wesentlichen konstant bleibt, zu dem weiteren Zeitpunkt um die Druckstufe auf den dritten Wert sinkt, der zu dem späteren Zeitpunkt erreicht ist, wobei die Differenz der weiteren und der späteren Zeitpunkte der Dauer der Zeitstufe entspricht, und ab dem weiteren Zeitpunkt der Bremsdruck im anderen Bremskreis für die Dauer der Zeitstufe bis zu dem späteren Zeitpunkt im Wesentlichen konstant bleibt.

Des weiteren kann die elektronische Steuerung dazu eingerichtet und programmiert sein, die abwechselnden Druckabbau- und Druckhaltephasen zwischen den beiden Bremskreisen ab dem späteren Zeitpunkt weiter fortzusetzen.

Weitere Ausgestaltungen und mögliche Modifikationen sind zusammen mit ihren Vorteilen in der nachfolgenden Beschreibung erläutert.

### Kurze Beschreibung der Zeichnungen

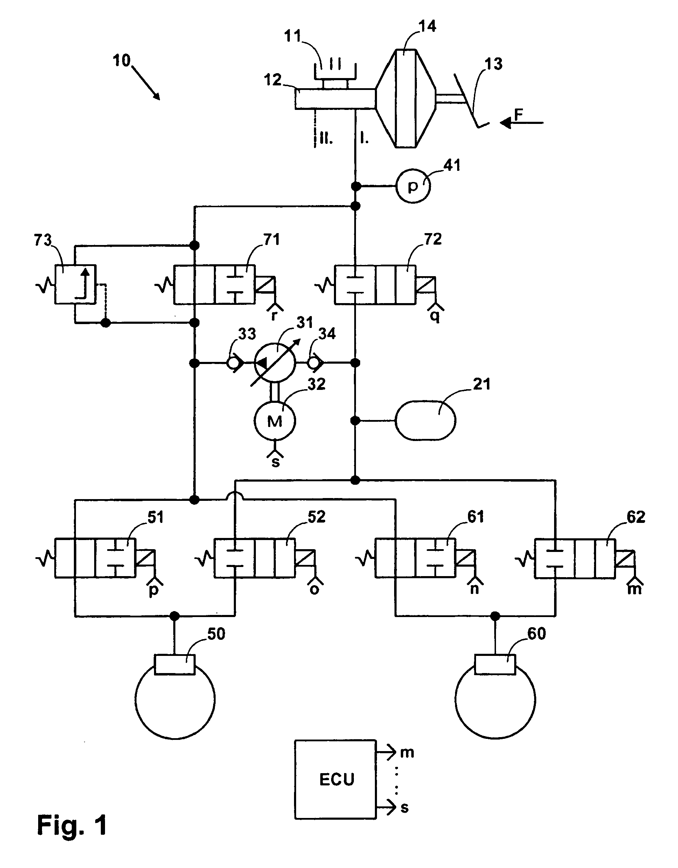

In Fig. 1 ist das hydraulische Schaltbild einer elektronisch steuer- bzw. regelbaren Bremsanlage schematisch dargestellt.

In Fig. 2 ist das hydraulische Schaltbild der Bremsanlage aus Fg. 1 gezeigt, bei dem aufgrund von bestimmten Stellungskombinationen die Bremskreise voneinander hydraulisch getrennt sind, so dass ein Druckausgleich zwischen ihnen über den Hauptzylinder nicht gegeben ist.

Fig. 3 veranschaulicht einen ersten Druckverlauf, der sich dadurch ergibt, dass in den beiden Bremskreisen das Einstellen der jeweiligen Bremsdruckverläufe in vordefinierten Druckstufen zeitlich versetzt stattfindet.

Fig. 4 veranschaulicht einen ersten Druckverlauf, der sich dadurch ergibt, dass in einem der beiden Bremskreise zunächst um eine einleitende Druckstufe der Hydraulikdruck erhöht oder erniedrigt wird, und anschließend das Einstellen der jeweiligen Bremsdruckverläufe in vordefinierten Druckstufen (die größer sind als die einleitende Druckstufe) zeitlich versetzt stattfindet.

### Detaillierte Beschreibung der Ausführungsbeispiele

Die Bremsanlage 10 arbeitet mit einer Hydraulikflüssigkeit, die zum Teil in einem Behälter 11 bevorratet ist, der als Reservoir mit einem Haupt(brems)zylinder 12 verbunden ist. Zum Erzeugen von Bremsdruck, der durch unter Druck setzen der Hydraulikflüssigkeit entsteht, dient der Hauptzylinder 12, der vom Fahrer durch ein Pedal 13 zu betätigen ist, wobei die vom Fahrer eingeleitete Kraft F durch einen zwischen dem Pedal 13 und dem Hauptzylinder 12 angeordneten Bremskraftverstärker 14 - vorzugsweise pneumatisch oder hydraulisch - verstärkt wird.

Von dem Hauptzylinder 12 ausgehend werden ein erster und zweiter Bremskreis I, II mit Hydraulikfluid versorgt. Die Bremskreise I, II sind im Wesentlichen identisch aufgebaut und haben jeweils zwei Radbremsen 50, 60. Daher ist hier nur der erste Bremskreis I im Detail dargestellt, der die zwei Radbremsen 50 und 60 versorgt. Je nachdem, welche Radbremsen des Fahrzeugs von welchem Bremskreis versorgt werden, ergibt sich eine Vorder-/Hinterachs-Aufteilung, d.h. der eine Bremskreis versorgt die Radbremsen der Vorderachse und der andere die der Hinterachse, oder eine diagonale Aufteilung, d.h. jeder Bremskreis versorgt die Radbremse eines Vorderrades und die des diagonal gegenüberliegenden Hinterrades.

Zwischen dem Hauptzylinder 12 und den Radbremsen 50 und 60 besteht eine hydraulische Verbindung. Diese hydraulische Verbindung wird von durch Elektromagnete betätigten 2/2-Wegeventilen 51, 52, 61, 62, 71 und 72 bestimmt, die in unbetätigtem, also elektrisch nicht angesteuertem Zustand die dargestellten Grundstellungen einnehmen. In ihrer Grundstellung befinden sich die 2/2-Wegeventile 51, 61 und 71 jeweils in ihrer Durchlassstellung und die 2/2-Wegeventile 52, 62 und 72 jeweils in ihrer Sperrstellung.

Zum Ausführen von Normalbremsungen besteht bei der dargestellten Grundstellung der 2/2-Wegeventile 51, 52, 61, 62, 71 und 72 eine unmittelbare hydraulische Verbindung zwischen dem Hauptzylinder 12 und den Radbremsen 50 und 60. Dabei wirkt bei betätigtem Hauptzylinder 12 in den Radbremsen 50 und 60 ein Bremsdruck, dessen Betrag von der vom Fahrer in das Pedal 13 eingeleiteten Kraft F sowie der Verstärkungskennlinie des Bremskraftverstärkers 14 abhängt.

Die erfindungsgemäße Bremsanlage ist dazu eingerichtet, eine Antiblockierregelung (ABS) auszuführen, um während einer Bremsung ein Blockieren der Räder zu verhindern. Dazu ist es erforderlich den wirkenden Bremsdruck in den Radbremsen 50 bzw. 60 individuell zu modulieren. Dies geschieht durch Einstellen in zeitlicher Folge wechselnder - weiter unten im Detail erläuterter - Druckaufbau-, Druckhalte- und Druckabbauphasen, die sich durch geeignete Ansteuerung der den Radbremsen 50 bzw. 60 zugeordneten 2/2-Wegeventile 51, 52 bzw. 61, 62 mittels einer elektronischen Steuerung ECU ergeben. Diese elektronische Steuerung ECU hat neben einer Reihe von Signaleingängen, die unter anderem von Raddrehzahlsensoren, Giergeschwindigkeitssensoren, und/oder Querbeschleunigungssensoren, etc. zugeführt werden können, Ansteuerausgänge für Ansteuersignale m, n, ... s für die elektrische Ansteuerung der 2/2-Wegeventile 51, 52, 61, 62, 71 und 72, sowie des Elektromotors 32 einer Pumpe 31. Die Ansteuerungen geschehen in Abhängigkeit von einerseits das Fahrzeugverhalten beschreibenden Messgrößen (z.B. Raddrehzahlen, Giergeschwindigkeit, Querbeschleunigung) und andererseits den Fahrerwunsch beschreibenden Messgrößen (z.B. Betätigung des Pedals 13, Lenkradwinkel). Als den Fahrerwunsch beschreibende Messgröße kann auch der im Hauptbremszylinder 12 erzeugte Bremsdruck p herangezogen werden, der dann mittels eines Sensors 41 erfasst und der ECU als Signaleingang zugeführt wird.

Während einer Druckaufbauphase nehmen die 2/2-Wegeventile 51, 52 bzw. 61, 62 jeweils ihre Grundstellung ein, so dass aufgrund einer durch die elektronische Steuerung ECU veranlassten Betätigung der Pumpe 31 durch ein Ansteuersignal s ein Erhöhen des Bremsdruckes in den Radbremsen 50 bzw. 60 wie bei einer Normalbremsung erfolgt.

Für eine Druckhaltephase werden nur die 2/2-Wegeventile 51 bzw. 61 durch Ansteuersignale p, n angesteuert und dabei in die jeweiligen Sperrstellungen überführt. Die 2/2-Wegeventile 52 bzw. 62 werden in der Druckhaltephase nicht angesteuert, daher verbleiben sie in ihrer Sperrstellung. Dadurch sind die Radbremsen 50 bzw. 60 hydraulisch vom Rest des Bremskreises abgekoppelt, so dass in den Radbremsen 50 bzw. 60 anstehender Bremsdruck konstant gehalten wird und nicht entweichen kann.

Bei einer Druckabbauphase werden sowohl die 2/2-Wegeventile 51 bzw. 61, als auch die 2/2-Wegeventile 52 bzw. 62 durch Ansteuersignale p, n; m, o angesteuert. Die 2/2-Wegeventile 51 bzw. 61 werden bei der Druckabbauphase in ihre jeweiligen Sperrstellungen und die 2/2-Wegeventile 52 bzw. 62 in ihre jeweiligen Durchlassstellungen überführt. Somit kann Hydraulikflüssigkeit aus der Radbremse 50 bzw. 60 abfließen, um einen in den Radbremsen 50 bzw. 60 anstehenden Bremsdruck zu erniedrigen.

Die während einer Druckabbauphase aus den Radbremsen 50 bzw. 60 über die 2/2-Wegeventile 52 bzw. 62 abfließende Hydraulikflüssigkeit wird mittels einer durch einen (durch ein Ansteuersignal s angesteuerten) Elektromotor 32 betätigten Pumpe 31 in den Bremskreis I zurückgefördert, wobei ein Niederdruckspeicher 21 zum Zwischenspeichern von Hydraulikflüssigkeit dient.

Die z.B. als Radialkolbenpumpe ausgeführte Pumpe 31 ist durch ein Sperrventil 33 am Ausgang der Pumpe 31 sowie ein Sperrventil 34 am Eingang der Pumpe 31 entgegen ihrer Förderrichtung sperrend ausgelegt.

Die Drehzahl des Elektromotors 32 ist durch das Ansteuersignal s von der ECU einstell- bzw. regelbar. Daher kann die Fördermenge der Pumpe 31 verändert werden. Auch ist es möglich, dass ein Elektromotor 32 gleichzeitig die korrespondierende Pumpe des hier nicht im Detail dargestellten zweiten Bremskreises II betätigt.

Automatische Bremsungen erfolgen in der Regel unabhängig von einer vom Fahrer am Pedal 13 eingeleiteten Kraft F. Solche sind z.B. eine Antriebsschlupfregelung (ASR), die ein Durchdrehen einzelner Räder bei einem Anfahrvorgang durch gezieltes Abbremsen verhindert, oder eine Fahrdynamikregelung (ESP), die das Fahrzeugverhalten im Grenzbereich durch gezieltes Abbremsen einzelner Räder an den Fahrerwunsch und die Fahrbahnverhältnisse anpasst, oder eine adaptive Geschwindigkeitsregelung (ACC), die unter anderem durch selbsttätiges Bremsen einen Abstand des eigenen Fahrzeugs zu einem vorausfahrenden Fahrzeug einhält.

Zum Ausführen von automatischen Bremsungen werden die 2/2-Wegeventile 71 und 72 angesteuert, so dass das 2/2-Wegeventil 71 seine Sperrstellung und das 2/2-Wegeventil 72 seine Durchflussstellung einnimmt. Dadurch ist zum einen der Ausgang der Pumpe 31 von dem Bremskreis II. bzw. dem Hauptzylinder 12 hydraulisch abgekoppelt, d.h. eine unmittelbare hydraulische Verbindung besteht nur unter dem Ausgang der Pumpe 31 und den Radbremsen 50 und 60. Zum anderen besteht eine hydraulische Verbindung des Eingangs der Pumpe 31 zu dem Hauptzylinder 12 bzw. dem Behälter 11, wodurch die Pumpe 31 Hydraulikflüssigkeit aus dem Behälter 11 ansaugen kann, um Bremsdruck in den Radbremsen 50 und 60 zu erzeugen. Ein Feineinstellen bzw. Modulieren des Bremsdrucks kann durch entsprechende Ansteuerung der den Radbremsen 50 bzw. 60 zugeordneten 2/2-Wegeventile 51, 52 bzw. 61, 62 vorgenommen werden, wie im Zusammenhang mit ABS erläutert.

Dem 2/2-Wegeventil 71 ist ein Druckbegrenzungsventil 73 parallel geschaltet. Dieses sorgt dafür, dass der Bremsdruck, der am Ausgang der Pumpe 31 erzeugt wird, wenn sich das 2/2-Wegeventil 71 in Sperrstellung befindet, ein vorherbestimmtes Maß nicht überschreiten kann. Diese Maßnahme vermeidet Schäden am Bremssystem.

Bei automatischen Bremsungen, die mit niedrigen Bremsdruckniveau abzulaufen haben, bemerkt der Fahrer sehr leicht ein Rucken und/oder Schiefziehen des Fahrzeugs. Dies liegt bei derartigen Bremsanlagen daran, dass bei automatischen Bremsungen in beiden Bremskreis I, II der Ausgang der Pumpe 31 vom Hauptzylinder 12 wegen des in Sperrstellung geschalteten 2/2-Wegeventil 71 hydraulisch abgekoppelt ist. Dadurch sind die Bremskreise I, II voneinander hydraulisch getrennt, so dass ein Druckausgleich im Hauptzylinder 12 nach dem Schwimmkolben-Prinzip, wie sonst bei herkömmlichen Bremssystemen der Fall, nicht gegeben ist.

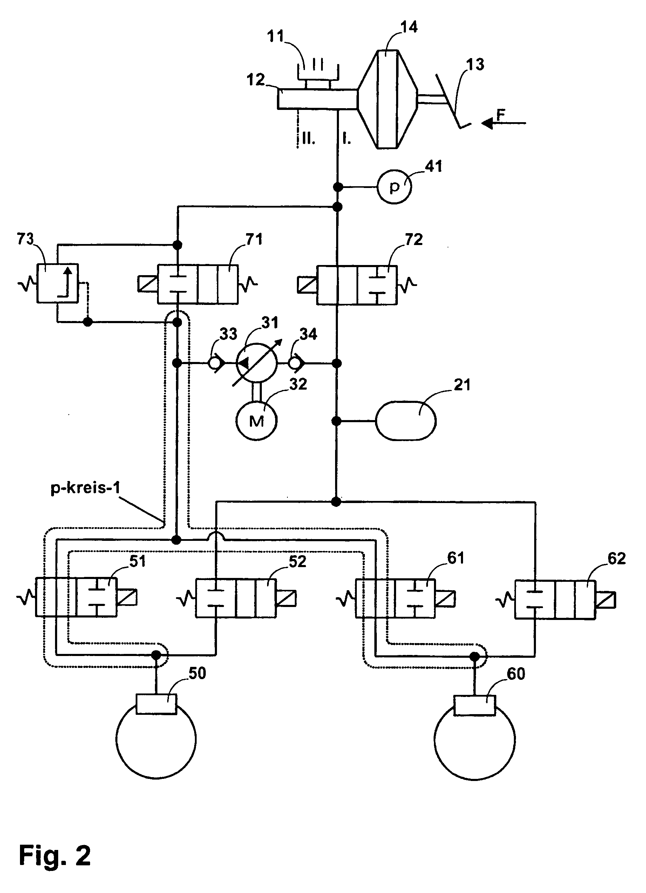

Diese Situation ist in Fig. 2 dargestellt, wobei das 2/2-Wegeventil 72 in Durchlassstellung geschaltet ist, damit die Pumpe 31 Hydraulikflüssigkeit aus dem Behälter 11 ansaugen kann, um einen Bremsdruck p-kreis-1 in den Radbremsen 50 und 60 des ersten Bremskreises I zu erzeugen.

Erfindungsgemäß wird nun vorgeschlagen, dass das Einstellen eines für ein bestimmtes Fahrzeugverhalten, insbesondere hinsichtlich Verzögerung oder Beschleunigung, gewünschten Bremsdruckverlaufes p-gesamt dadurch erfolgt, dass in jedem der Bremskreise I, II das Einstellen eines Bremsdruckverlaufs p-kreis-1, p-kreis-2 in vordefinierten Druckstufen delta-p zeitlich so erfolgt, dass die Bremsdruckverläufe p-kreis-1, p-kreis-2 um eine vordefinierte Zeitstufe delta-t versetzt stattfinden.

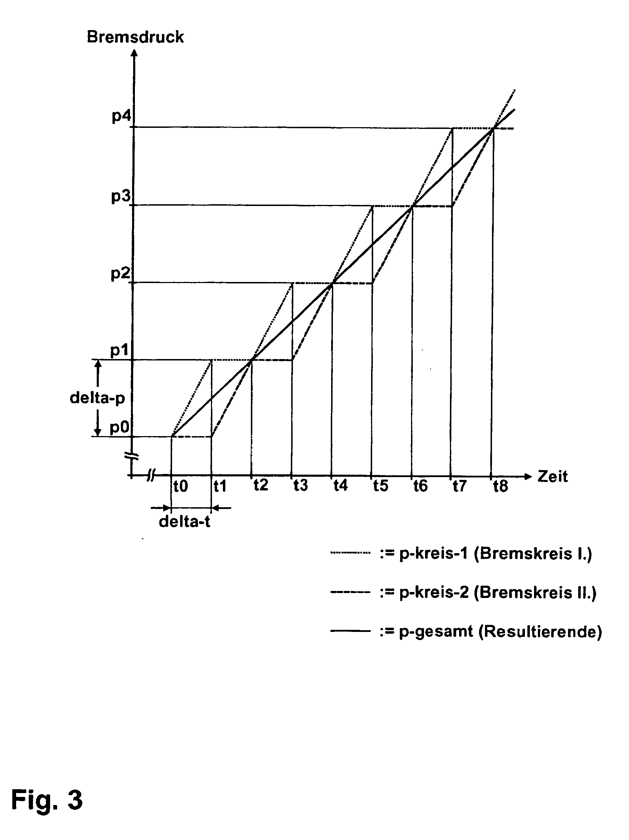

Fig. 3 veranschaulicht hierfür eine erste Vorgehensweise. Ausgehend von einem Ausgangswert p0 wird zu einem Zeitpunkt t0 im ersten Bremskreis I der Bremsdruck p-kreis-1 um eine Druckstufe delta-p auf einen Wert p1 erhöht. Sobald der Bremsdruck p-kreis-1 zu dem Zeitpunkt t1 den Wert p1 erreicht hat, wird er bis zu einem Zeitpunkt t2 für die Dauer einer Zeitstufe delta-t, die der Differenz der Zeitpunkte t1, t0 entspricht, konstant gehalten.

Parallel dazu wird im zweiten Bremskreis II der Bremsdruck p-kreis-2 ab dem Zeitpunkt t0 für die Dauer der Zeitstufe delta-t auf dem Ausgangswert p0 konstant gehalten, zu dem Zeitpunkt t1 um die Druckstufe delta-p auf den Wert p1 erhöht, der bis zu dem Zeitpunkt t2 konstant gehalten wird, wobei die Differenz der Zeitpunkte t2, t1 der Dauer der Zeitstufe delta-t entspricht.

Wird dieses Wechselspiel unter den Bremskreisen I, II ab dem Zeitpunkt t2 weiter fortgesetzt, so stellen sich in den Bremskreisen I, II die in Fig. 3 dargestellten Bremsdruckverläufe p-kreis-1, p-kreis-2 ein. Aus diesen resultiert der für das Fahrzeugverhalten maßgebende Bremsdruckverlauf p-gesamt, für den sich ein im Prinzip linearer Verlauf ergibt.

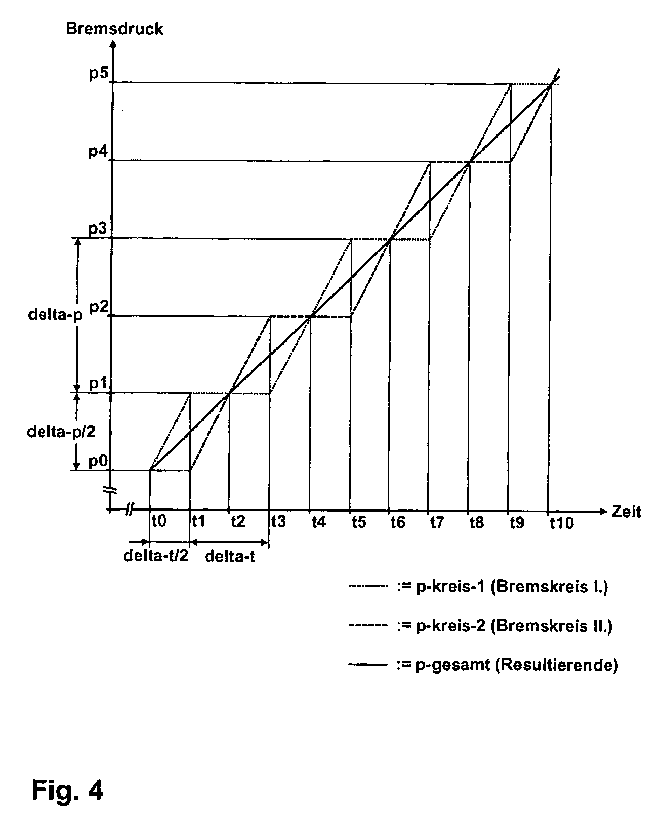

Bei dem in Fig. 4 gezeigten zweiten Ausführungsbeispiel wird zu einem Zeitpunkt t0 ausgehend von einem Ausgangswert p0 im ersten Bremskreis I der Bremsdruck p-kreis-1 um eine einleitende Druckstufe delta-p/2 auf einen Wert p1 erhöht, der zu einem Zeitpunkt t1 erreicht ist, wobei die Differenz der Zeitpunkte t1, t0 einer einleitenden Zeitstufe delta-t/2 entspricht. Sobald der Bremsdruck p-kreis-1 zu dem Zeitpunkt t1 den Wert p1 erreicht hat, wird er bis zu einem Zeitpunkt t2 für die Dauer einer Zeitstufe delta-t konstant gehalten. Dabei entspricht die Zeitstufe delta-t der Differenz der Zeitpunkte t2, t1 oder dem 2-fachen der einleitenden Zeitstufe delta-t/2. Zum Zeitpunkt t2 wird der Bremsdruck p-kreis-1 bis zu einem Zeitpunkt t3 um eine Druckstufe delta-p erhöht auf einen Wert p3 erhöht, wobei die Differenz der Zeitpunkte t3, t2 der Zeitstufe delta-t und die Druckstufe delta-p dem 2-fachen der einleitenden Druckstufe delta-p/2 entspricht.

Im zweiten Bremskreis II wird parallel dazu der Bremsdruck p-kreis-2 ab dem Zeitpunkt t0 für die Dauer der einleitenden Zeitstufe delta-t/2 auf dem Ausgangswert p0 konstant gehalten, zu dem Zeitpunkt t1 um die Druckstufe delta-t auf den Wert p2 erhöht, die zu dem Zeitpunkt t2 erreicht ist, wobei die Differenz der Zeitpunkte t2, t1 der Dauer der Zeitstufe delta-t entspricht. Ab dem Zeitpunkt t2 wird der Bremsdruck p-kreis-2 für die Dauer der Zeitstufe delta-t bis zu dem Zeitpunkt t3 konstant gehalten.

Durch Fortsetzen dieses Wechselspiel unter den Bremskreisen I, II ab dem Zeitpunkt t3 stellen sich in den Bremskreisen I, II die in Fig. 4 dargestellten Bremsdruckverläufe p-kreis-1, p-kreis-2 ein, aus denen der für das Fahrzeugverhalten maßgebende Bremsdruckverlauf p-gesamt resultiert.

Während bei der Vorgehensweise gemäß Fig. 3 der Verlauf der Bremsdrücke p-kreis-1, p-kreis-2 nur zeitlich um eine Zeitstufe delta-p zueinander versetzt ist, verlaufen die Bremsdrücke p-kreis-1, p-kreis-2 bei der Vorgehensweise gemäß Fig. 4 sowohl zeitlich um eine Zeitstufe delta-t/2 als auch wertmäßig um eine Druckstufe delta-p/2 zueinander versetzt, so dass sich der für das Fahrzeugverhalten maßgebende Bremsdruckverlauf p-gesamt durch einen noch stärker geglätteten Verlauf auszeichnet.

Jedenfalls kann unabhängig davon, ob das Ausführungsbeispiel gemäß Fig. 3 oder 4 angewendet wird, der Gradient des für das Fahrzeugverhalten während der Bremsung maßgebenden Bremsdruckverlaufes p-gesamt durch geeignetes Adaptieren der Druckstufen delta-p bzw. delta-p/2 und/oder der Zeitstufen delta-t bzw. delta/2 in einem weiten Bereich variiert werden.

Auch versteht es sich dem Fachmann, dass das anhand der Ausführungsbeispiele Fig. 3 bzw. 4 dargestellte erfindungsgemäße Erhöhen der Bremsdrücke p-kreis-1, p-kreis-2 gleichfalls für das Reduzieren der Bremsdrücke angewendet werden kann.

## Patentansprüche

1. Eine hydraulische Bremsanlage (10) für ein Landfahrzeug, mit
- einem vom Fahrer durch ein Pedal (13) direkt oder über einen dem Pedal (13) nachgeschalteten Bremskraftverstärker (14) zu betätigenden Hauptzylinder (12) zum Erzeugen von Bremsdruck in zwei Bremskreisen (I, II), von denen jeder zwei Radbremsen (50, 60) aufweist, wobei
- eine hydraulische Verbindung zwischen dem Hauptzylinder (12) und den Radbremsen (50, 60) durch Ventilanordnungen (51, 52, 61, 62, 71, 72) in Abhängigkeit von Ansteuersignalen aus einer elektronischen Steuerung (ECU) herzustellen oder zu sperren ist, um vom Fahrer direkt bewirkte Normalbremsungen oder durch die elektronische Steuerung (ECU) beeinflusste Bremsungen in Abhängigkeit von der elektronischen Steuerung (ECU) zugeführten, das Fahrzeugverhalten und/oder den Fahrerwunsch wiedergebenden Messgrößen auszuführen, indem der Bremsdruckverlauf in den Radbremsen (50, 60) durch Ansteuern der ihnen zugeordneten Ventilanordnungen (51, 52, 61, 62, 71, 72) verändert wird, wobei - die elektronische Steuerung (ECU) dazu eingerichtet und programmiert ist, für das Einstellen eines für ein bestimmtes Fahrzeugverhalten erforderlichen Bremsdruckverlaufes (p-gesamt) Ansteuersignale (m ... s) bereitzustellen, **dadurch gekennzeichnet, dass** durch die Ansteuersignale (m...s) das Einstellen eines jeweiligen Bremsdruckverlaufs (p-kreis-1, p-kreis-2) in den beiden Bremskreisen (I, II) in vordefinierten Druckstufen (delta-p) zeitlich um eine vordefinierte Zeitstufe (delta-t) versetzt ist.

2. Die hydraulische Bremsanlage (10) nach Anspruch 1, bei der
- eine durch die elektronische Steuerung (ECU) über ein Ansteuersignal (s) betätigbare Pumpe (31) zum Erhöhen und/oder zum Erniedrigen des Bremsdruckes in den Radbremsen (50, 60) vorgesehen ist.

3. Die hydraulische Bremsanlage (10) nach Anspruch 2, bei der
- die Pumpe (31) in Abhängigkeit von dem Ansteuersignal (s) der elektronischen Steuerung (ECU) ihre Fördermenge verändert.

4. Die hydraulische Bremsanlage (10) nach einem der Ansprüche 1 bis 3, bei der
- ein Elektromotor (32) gleichzeitig die Pumpen (31) beider Bremskreise (I, II) betätigt.

5. Die hydraulische Bremsanlage (10) nach einem der Ansprüche 1 bis 4, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- ausgehend von einem Ausgangswert (p0) zu einem Ausgangs-Zeitpunkt (t0) in einem der Bremskreise (I) der Bremsdruck (p-kreis-1) um die vordefinierte Druckstufe (delta-p) auf erstenWert (p1) steigt und
- nach dessen Erreichen dieser Bremsdruck (p-kreis-1) für die Dauer der vordefinierten Zeitstufe (delta-t) bis zu einem zweiten Zeitpunkt (t2) im Wesentlichen konstant bleibt.

6. Die hydraulische Bremsanlage (10) nach Anspruch 5, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- parallel zum Erhöhen des Bremsdruckes (p-kreis-1) im einen Bremskreis (I) um die Druckstufe (delta-p) auf den ersten Wert (p1), im anderen Bremskreis (II) der Bremsdruck (p-kreis-2) ab dem Ausgangs-Zeitpunkt (t0) für die Dauer der Zeitstufe (delta-t) auf dem Ausgangswert (p0) im Wesentlichen konstant bleibt,
- der Bremsdruck (p-kreis-2) im zweiten Bremskreis (II) zu einem ersten Zeitpunkt (t1) um die Druckstufe (delta-p) auf den ersten Wert (p1) steigt, der zu dem zweiten Zeitpunkt (t2) erreicht ist.

7. Die hydraulische Bremsanlage (10) nach Anspruch 5 oder 6, bei der
- die elektronische Steuerung (ECU) dazu eingerichtet und programmiert ist, die abwechselnden Druckanstiegs- und Druckhaltephasen zwischen den beiden Bremskreisen (I, II) ab dem zweiten Zeitpunkt (t2) weiter fortzusetzen.

8. Die hydraulische Bremsanlage (10) nach einem der Ansprüche 1 bis 7, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- ausgehend von einem vierten Ausgangswert (p4) zu einem achten Zeitpunkt (t8) in einem der Bremskreise (II) der Bremsdruck (p-kreis-2) um die Druckstufe (delta-p) auf einen dritten Wert (p3) sinkt und
- nach dessen Erreichen dieser Bremsdruck (p-kreis-2) für die Dauer der Zeitstufe (delta-t) bis zu einem sechsten Zeitpunkt (t6) im Wesentlichen konstant bleibt.

9. Die hydraulische Bremsanlage (10) nach Anspruch 8, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- parallel zum Senken des Bremsdruckes (p-kreis-2) im einen Bremskreis (II) um die Druckstufe (delta-p) auf den dritten Wert (p3), im anderen Bremskreis (I) der Bremsdruck (p-kreis-1) ab dem achten Zeitpunkt (t8) für die Dauer der Zeitstufe (delta-t) auf dem vierten Ausgangswert (p4) im Wesentlichen konstant bleibt,
- der Bremsdruck (p-kreis-1) im anderen Bremskreis (I) zu einem siebten Zeitpunkt (t7) um die Druckstufe (delta-p) auf den dritten Wert (p3) sinkt, der zu dem sechsten Zeitpunkt.(t6) erreicht ist.

10. Die hydraulische Bremsanlage (10) nach Anspruch 8 oder 9, bei der
- die elektronische Steuerung (ECU) dazu eingerichtet und programmiert ist, die abwechselnden Druckabbau- und Druckhaltephasen zwischen den beiden Bremskreisen (I, II) ab dem sechsten Zeitpunkt (t6) weiter fortzusetzen.

11. Die hydraulische Bremsanlage (10) nach einem der Ansprüche 1 bis 10, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- ausgehend von einem ersten Ausgangswert (p0) zu dem Ausgangs-Zeitpunkt (t0) in einem der Bremskreise (I) der Bremsdruck (p-kreis-1) um eine einleitende niedrige Druckstufe (delta-p/2) auf den ersten Wert (p1) steigt, der zu dem ersten Zeitpunkt (t1) erreicht ist, und
- nach dessen Erreichen dieser Bremsdruck (p-kreis-1) für die Dauer der Zeitstufe (delta-t) bis zu dem dritten Zeitpunkt (t3) im Wesentlichen konstant bleibt.

12. Die hydraulische Bremsanlage (10) Anspruch 11, bei der
- die Druckstufe (delta-p) ein mehrfaches, vorzugsweise zweifaches der einleitenden niedrigen Druckstufe (delta-p/2) ist.

13. Die hydraulische Bremsanlage (10) nach Anspruch 11 oder 12, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- zum dritten Zeitpunkt (t3) im einen Bremskreis (I) der Bremsdruck (p-kreis-1) bis zu einem fünften Zeitpunkt (t5) um die Druckstufe (delta-p) auf einen dritten Wert (p3) steigt, wobei die Differenz der fünften und dritten Zeitpunkte (t5, t3) im Wesentlichen der Zeitstufe (delta-t), und die Druckstufe (delta-p) im Wesentlichen einem mehrfachen, vorzugsweise zweifachen der einleitenden niedrigen Druckstufe (delta-p/2) entspricht.

14. Die hydraulische Bremsanlage (10) nach einem der Ansprüche 11 bis 13, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- parallel zum Ansteigen des Bremsdrucks (p-kreis-1) im einen Bremskreis (I) um die einleitende niedrige Druckstufe (delta-p/2) auf den ersten Wert (p1) und dessen Halten für die Dauer der Zeitstufe (delta-t) bis zu dem dritten Zeitpunkt (t3),
- der Bremsdruck (p-kreis-2) im anderen Bremskreis (II) ab dem Ausgangs-Zeitpunkt (t0) für die Dauer der einleitenden niedrigen Zeitstufe (delta-t/2) auf dem Ausgangswert (p0) im Wesentlichen konstant bleibt,
- zu dem ersten Zeitpunkt (t1) um die Druckstufe (delta-p) auf den zweiten Wert (p2) steigt, der zu dem dritten Zeitpunkt (t3) erreicht ist, wobei die Differenz der dritten und ersten Zeitpunkte (t3, t1) der Dauer der Zeitstufe (delta-t) entspricht, und
- ab dem dritten Zeitpunkt (t3) der Bremsdruck (p-kreis-2) im zweiten Bremskreis (II) für die Dauer der Zeitstufe (delta-t) bis zu dem fünften Zeitpunkt (t5) im Wesentlichen konstant bleibt.

15. Die hydraulische Bremsanlage (10) nach einem der Ansprüche 11 bis 14, bei der
- die elektronische Steuerung (ECU) dazu eingerichtet und programmiert ist, die abwechselnden Druckaufbau- und Druckhaltephasen zwischen den beiden Bremskreisen (I, II) ab dem fünften Zeitpunkt (t5) weiter fortzusetzen.

16. Die hydraulische Bremsanlage (10) nach einem der Ansprüche 1 bis 15, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- ausgehend von einem fünften Ausgangswert (p5) zu einem zehnten Zeitpunkt (t10) im einen Bremskreis (II) der Bremsdruck (p-kreis-2) um die einleitende niedrige Druckstufe (delta-p/2) auf einen vierten Wert (p4) sinkt, der zu einem neunten Zeitpunkt (t9) erreicht ist, und
- nach dessen Erreichen dieser Bremsdruck (p-kreis-2) für die Dauer der Zeitstufe (delta-t) bis zu einem Zeitpunkt (t7) im Wesentlichen konstant bleibt.

17. Die hydraulische Bremsanlage (10) nach Anspruch 16, bei der
- die Druckstufe (delta-p) ein mehrfaches, vorzugsweise zweifaches der einleitenden niedrigen Druckstufe (delta-p/2) dauert.

18. Die hydraulische Bremsanlage (10) nach Anspruch 16 oder 17, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- zum siebten Zeitpunkt (t7) im einen Bremskreis (II) der Bremsdruck (p-kreis-2) bis zu einem fünften Zeitpunkt (t5) um die Druckstufe (delta-p) auf einen zweiten Wert (p2) fällt, wobei die Differenz der siebten und fünften Zeitpunkte (t7, t5) im Wesentlichen der Zeitstufe (delta-t) und die Druckstufe (delta-p) im Wesentlichen einem mehrfachen, vorzugsweise zweifachen der einleitenden niedrigen Druckstufe (delta-p/2) entspricht.

19. Die hydraulische Bremsanlage (10) nach einem der Ansprüche 16 bis 18, bei der
- die elektronische Steuerung (ECU) dazu eingerichtet und programmiert ist, für das Einstellen eines Bremsdruckverlaufes (p-gesamt) Ansteuersignale (m ... s) bereitzustellen, durch die
- parallel zum Sinken des Bremsdrucks (p-kreis-2) im einen Bremskreis (II) um die einleitende niedrige Druckstufe (delta-p/2) auf einen vierten Wert (p4) und dessen Halten für die Dauer einer Zeitstufe (delta-t) bis zu dem siebten Zeitpunkt (t7),
- der Bremsdruck (p-kreis-1) im anderen Bremskreis (I) ab dem Zeitpunkt (t10) für die Dauer der einleitenden niedrigen Zeitstufe (delta-t/2) auf dem fünften Ausgangswert (p5) im Wesentlichen konstant bleibt,
- zu dem neunten Zeitpunkt (t9) um die Druckstufe (delta-p) auf den dritten Wert (p3) sinkt, der zu dem siebten Zeitpunkt (t7) erreicht ist, wobei die Differenz der neunten und siebten Zeitpunkte (t9, t7) der Dauer der Zeitstufe (delta-t) entspricht, und
- ab dem siebten Zeitpunkt (t7) der Bremsdruck (p-kreis-1) im anderen Bremskreis (I) für die Dauer der Zeitstufe (delta-t) bis zu dem fünften Zeitpunkt (t5) im Wesentlichen konstant bleibt.

20. Die hydraulische Bremsanlage (10) nach einem der Ansprüche 16 bis 19, bei der
- die elektronische Steuerung (ECU) dazu eingerichtet und programmiert ist, die abwechselnden Druckabbau- und Druckhaltephasen zwischen den beiden Bremskreisen (I, II) ab dem fünften Zeitpunkt (t5) weiter fortzusetzen.

## Claims

1. A hydraulic brake system (10) for a land vehicle, having
- a master cylinder (12), which is adapted to be actuated by the driver by means of a pedal (13) directly or via a brake booster (14) disposed downstream of the pedal (13), for generating brake pressure in two brake circuits (I, II), each of which comprises two wheel brakes (50, 60), wherein
- a hydraulic connection between the master cylinder (12) and the wheel brakes (50, 60) is to be established or blocked by valve arrangements (51, 52, 61, 62, 71, 72) in dependence upon trigger signals from an electronic control unit (ECU) in order to implement normal braking operations brought about directly by the driver or braking operations influenced by the electronic control unit (ECU) in dependence upon measured variables, which are supplied to the electronic control unit (ECU) and reflect the vehicle behaviour and/or the driver request, in that the brake pressure characteristic in the wheel brakes (50, 60) is varied by activating the valve arrangements (51, 52, 61, 62, 71, 72) associated therewith, wherein
- the electronic control unit (ECU) is devised and programmed in such a way that, in order to set a brake pressure characteristic (p-total) required for a specific vehicle behaviour, it provides trigger signals (m ... s), **characterized in that** the setting of a respective brake pressure characteristic (p-circuit-1, p-circuit-2) in the two brake circuits (I, II) in predefined pressure stages (delta-p) is staggered in terms of time by a substantially predefined time stage (delta-t) by the trigger signals (m ...s).

2. The hydraulic brake system (10) according to claim 1, in which
- a pump (31), which is adapted to be actuated by the electronic control unit (ECU) by means of a trigger signal (s), is provided for raising and/or lowering the brake pressure in the wheel brakes (50, 60).

3. The hydraulic brake system (10) according to claim 2, in which
- the pump (31) varies its delivery rate in dependence upon the trigger signal (s) of the electronic control unit (ECU).

4. The hydraulic brake system (10) according to one of claims 1 to 3, in which
- an electric motor (32) actuates the pumps (31) of both brake circuits (I, II) simultaneously.

5. The hydraulic brake system (10) according to one of claims 1 to 4, in which
- the electronic control unit (ECU) is devised and programmed in such a way that, in order to set a brake pressure characteristic (p-total), it provides trigger signals (m ... s), by means of which
- starting from an initial value (p0) at an initial point of time (t0) in one of the brake circuits (I) the brake pressure (p-circuit-1) rises by the predefined pressure stage (delta-p) to a first value (p1) and
- after attainment thereof this brake pressure (p-circuit-1) is held substantially constant for the duration of the predefined time stage (delta-t) up to a second point of time (t2).

6. The hydraulic brake system (10) according to claim 5, in which
- the electronic control unit (ECU) is devised and programmed in such a way that, in order to set a brake pressure characteristic (p-total), it provides trigger signals (m ... s), by means of which
- in parallel to the raising of the brake pressure (p-circuit-1) in the one brake circuit (I) by the pressure stage (delta-p) to the first value (p1), in the other brake circuit (II) the brake pressure (p-circuit-2) from the initial point of time (t0) for the duration of the time stage (delta-t) remains substantially constant at the initial value (p0),
- the brake pressure (p-circuit-2) in the second brake circuit (II) at a first point of time (t1) rises by a pressure stage (delta-p) to the first value (p1), which has been reached at the second point of time (t2).

7. The hydraulic brake system (10) according to claim 5 or 6, in which
- the electronic control unit (ECU) is devised and programmed to further continue the alternating pressure increase and pressure keeping phases between the two brake circuits (I, II) from the second point of time (t2).

8. The hydraulic brake system (10) according to one of claims 1 to 7, in which
- the electronic control unit (ECU) is devised and programmed in such a way that, in order to set a brake pressure characteristic (p-total), it provides trigger signals (m ... s), by means of which
- starting from a fourth initial value (p4) at an eighth point of time (t8) in one of the brake circuits (II) the brake pressure (p-circuit-2) drops by the pressure stage (delta-p) to a third value (p3) and
- after attainment thereof this brake pressure (p-circuit-2) remains substantially constant for the duration of the time stage (delta-t) up to a sixth point of time (t6).

9. The hydraulic brake system (10) according to claim 8, in which
- the electronic control unit (ECU) is devised and programmed in such a way that, in order to set a brake pressure characteristic (p-total), it provides trigger signals (m ... s), by means of which
- parallel to the lowering of the brake pressure (p-circuit-2) in the one brake circuit (II) by the pressure stage (delta-p) to the third value (p3), in the other brake circuit (I) the brake pressure (p-circuit-1) from the eighth of time (t8) remains substantially constant at the fourth initial value (p4) for the duration of the time stage (delta-t),
- the brake pressure (p-circuit-1) in the other brake circuit (I) at a seventh point of time (t7) drops by a pressure stage (delta-p) to the third value (p3), which has been reached at the sixth point of time (t6).

10. The hydraulic brake system (10) according to claim 8 or 9, in which
- the electronic control unit (ECU) is devised and programmed to further continue the alternating pressure reduction and pressure keeping phases between the two brake circuits (I, II) from the sixth point of time (t6).

11. The hydraulic brake system (10) according to one of claims 1 to 10, in which
- the electronic control unit (ECU) is devised and programmed in such a way that, in order to set a brake pressure characteristic (p-total), it provides trigger signals (m ... s), by means of which
- starting from a first initial value (p0) at the initial point of time (t0) in one of the brake circuits (I) the brake pressure (p-circuit-1) rises by an introductory low pressure stage (delta-p/2) to the first value (p1), which has been reached at the first point of time (t1), and
- after attainment thereof this brake pressure (p-circuit-1) remains substantially constant for the duration of the time stage (delta-t) up to the third point of time (t3).

12. The hydraulic brake system (10) according to claim 11, in which
- the pressure stage (delta-t) is a multiple of, preferably two times the introductory low pressure stage (delta-p/2).

13. The hydraulic brake system (10) according to claim 11 or 12, in which
- the electronic control unit (ECU) is devised and programmed in such a way that, in order to set a brake pressure characteristic (p-total), it provides trigger signals (m ... s), by means of which
- at the third point of time (t3) in the one brake circuit (I) the brake pressure (p-circuit-1) up to a fifth point of time (t5) rises by the pressure stage (delta-p) to a third value (p3), wherein the difference of the fifth and third points of time (t5, t3) corresponds substantially to the time stage (delta-t) and the pressure stage (delta-p) corresponds substantially to a multiple of, preferably two times the introductory low pressure stage (delta-p/2).

14. The hydraulic brake system (10) according to one of claims 11 to 13, in which
- the electronic control unit (ECU) is devised and programmed in such a way that, in order to set a brake pressure characteristic (p-total), it provides trigger signals (m ... s), by means of which
- parallel to the raising of the brake pressure (p-circuit-1) in the one brake circuit (I) by the introductory low pressure stage (delta-p/2) to the first value (p1) and the keeping of said brake pressure for the duration of the time stage (delta-t) up to the third point of time (t3),
- the brake pressure (p-circuit-2) in the other brake circuit (II) from the initial point of time (t0) remains substantially constant at the initial value (p0) for the duration of the introductory low time stage (delta-t/2),
- at the first point of time (t1) rises by the pressure stage (delta-p) to the second value (p2), which has been reached at the third point of time (t3), the difference of the third and first points of time (t3, t1) corresponding to the duration of the time stage (delta-t), and
- from the third point of time (t3) the brake pressure (p-circuit-2) in the second brake circuit (II) remains substantially constant for the duration of the time stage (delta-t) up to the fifth point of time (t5).

15. The hydraulic brake system (10) according to one of claims 11 to 14, in which
- the electronic control unit (ECU) is devised and programmed to further continue the alternating pressure build-up and pressure keeping phases between the two brake circuits (I, II) from the fifth point of time (t5).

16. The hydraulic brake system (10) according to one of claims 1 to 15, in which
- the electronic control unit (ECU) is devised and programmed in such a way that, in order to set a brake pressure characteristic (p-total), it provides trigger signals (m ... s), by means of which
- starting from a fifth initial value (p5) at a tenth point of time (t10) in the one brake circuit (II) the brake pressure (p-circuit-2) drops by the introductory low pressure stage (delta-p/2) to a fourth value (p4), which has been reached at a ninth point of time (t9), and
- after attainment thereof this brake pressure (p-circuit-2) remains substantially constant for the duration of the time stage (delta-t) up to a point of time (t7).

17. The hydraulic brake system (10) according to claim 16, in which
- the pressure stage (delta-p) lasts a multiple of, preferably two times the introductory low time stage (delta-p/2).

18. The hydraulic brake system (10) according to claim 16 or 17, in which
- the electronic control unit (ECU) is devised and programmed in such a way that, in order to set a brake pressure characteristic (p-total), it provides trigger signals (m ... s), by means of which
- at the seventh point of time (t7) in the one brake circuit (II) the brake pressure (p-circuit-2) up to a fifth point of time (t5) drops by the pressure stage (delta-p) to a second value (p2), wherein the difference of the seventh and fifth points of time (t7, t5) corresponds substantially to the time stage (delta-t) and the pressure stage (delta-p) corresponds substantially to a multiple of, preferably two times the introductory low pressure stage (delta-p/2).

19. The hydraulic brake system (10) according to one of claims 16 to 18, in which
- the electronic control unit (ECU) is devised and programmed in such a way that, in order to set a brake pressure characteristic (p-total), it provides trigger signals (m ... s), by means of which
- parallel to the lowering of the brake pressure (p-circuit-2) in the one brake circuit (II) by the introductory low pressure stage (delta-p/2) to a fourth value (p4) and the keeping of said pressure for the duration of a time stage (delta-t) up to a seventh point of time (t7),
- the brake pressure (p-circuit-1) in the other brake circuit (I) from the point of time (t10) remains substantially constant at the fifth initial value (p5) for the duration of the introductory low time stage (delta-t/2),
- at the ninth point of time (t9) drops by the pressure stage (delta-p) to the third value (p3), which has been reached at the seventh point of time (t7), the difference of the ninth and seventh points of time (t9, t7) corresponding to the duration of the time stage (delta-t), and
- from the seventh point of time (t7) the brake pressure (p-circuit-1) in the other brake circuit (I) remains substantially constant for the duration of the time stage (delta-t) up to the fifth point of time (t5).

20. The hydraulic brake system (10) according to one of claims 16 to 19, in which
- the electronic control unit (ECU) is devised and programmed to further continue the alternating pressure reduction and pressure keeping phases between the two brake circuits (I, II) from the fifth point of time (t5).

## Revendications

1. Système de freinage hydraulique (10) pour véhicule terrestre, comprenant
- un maître-cylindre (12) devant être actionné par le conducteur directement au moyen d'une pédale (13) ou par l'intermédiaire d'un servofrein (14) placé en aval de la pédale (13) pour produire une pression de freinage dans deux circuits de freinage (I, II) comprenant chacun deux freins de roue (50, 60),
- une liaison hydraulique entre le maître-cylindre (12) et les freins de roue (50, 60) devant être établie ou bloquée au moyen d'ensembles de soupapes (51, 52, 61, 71, 72) en fonction de signaux de commande fournis par une commande électronique (ECU) afin d'exécuter des freinages normaux provenant directement du conducteur ou des freinages influencés parle commande électronique (ECU) en fonction des grandeurs de mesure fournies par la commande électronique (ECU) et représentant le comportement du véhicule et/ou le souhait du conducteur, l'évolution de la pression de freinage étant modifiée dans les freins de roue (50, 60) par commande des ensembles de soupapes (51, 52, 61, 62, 71, 72) associés auxdits freins de roue,
- la commande électronique (ECU) étant conçue et programmée pour fournir des signaux de commande (m ... s) servant à réguler l'évolution de la pression de freinage (p-gesamt) nécessaire à l'obtention d'un comportement de véhicule déterminé, **caractérisé en ce que** lesdits signaux de commande (m ... s) décalent dans le temps d'un palier temporel prédéfini (delta-t) et suivant des paliers de pression prédéfinis (delta-p) la régulation de l'évolution de la pression de freinage (p-kreis-1, p-kreis-2) dans chacun des deux circuits (I, II).

2. Système de freinage hydraulique (10) selon la revendication 1, dans lequel
- il est prévu une pompe (31) actionnable par un signal de commande (s) provenant de la commande électronique (ECU) pour augmenter et/ou diminuer la pression de freinage dans les freins de roue (50, 60).

3. Système de freinage hydraulique (10) selon la revendication 2, dans lequel
- la pompe (31) modifie son débit en fonction du signal de commande (s) fourni par la commande électronique (ECU).

4. Système de freinage hydraulique (10) selon l'une des revendications 1 à 3, dans lequel
- un moteur électrique (32) actionne simultanément les pompes (31) des deux circuits de freinage (I, II).

5. Système de freinage hydraulique (10) selon l'une des revendications 1 à 4, dans lequel
- la commande électronique (ECU) est conçue et programmée pour fournir des signaux de commande (m ... s) servant à réguler l'évolution de la pression de freinage (p-gesamt) et par lesquels
- en partant d'une valeur de sortie (p0) à un instant de sortie (t0) dans un des circuits de freinage (I), la pression de freinage (p-kreis-1) augmente et passe au palier de pression prédéfini (delta-p) pour atteindre la première valeur (p1) et,
- une fois cette valeur atteinte, ladite pression de freinage (p-kreis-1) reste, pour la durée du palier temporel prédéfini (delta-t), sensiblement constante jusqu'au second instant (t2).

6. Système de freinage hydraulique (10) selon la revendication 5, dans lequel
- la commande électronique (ECU) est conçue et programmée pour fournir des signaux de commande (m ... s) servant à réguler l'évolution de la de pression de freinage (p-gesamt) et par lesquels
- pendant que la pression de freinage (p-kreis-1) dans un circuit de freinage (I) augmente d'un palier de pression pour atteindre la première valeur (p1), la pression de freinage (p-kreis-2) dans l'autre circuit de freinage (II) reste, à partir de l'instant de sortie (t0), sensiblement constante en se maintenant à la valeur de sortie (p0) pour la durée du palier temporel (delta-t),
- la pression de freinage (p-kreis-2) dans le second circuit de freinage (II) augmente au premier instant (t1) d'un palier de pression (delta-p) pour passer à la première valeur (p1) qui est atteinte au second instant (t2).

7. Système de freinage hydraulique (10) selon la revendication 5 ou 6, dans lequel
- la commande électronique (ECU) est conçue et programmée pour qu'à partir du second instant (t2), la phase d'augmentation et la phase de maintien de la pression continuent à s'alterner entre les deux circuits de freinage (I, II).

8. Système de freinage hydraulique (10) selon l'une des revendications 1 à 7, dans lequel
- la commande électronique (ECU) est conçue et programmée pour fournir des signaux de commande (m ... s) servant à réguler l'évolution de la de pression de freinage (p-gesamt), par lesquels
- en partant d'une quatrième valeur de sortie (p4) à un huitième instant (t8) dans un des circuits de freinage (II), la pression de freinage (p-kreis-2) diminue d'un palier de pression (delta-p) pour tomber à une troisième valeur (p3), et,
- une fois cette valeur atteinte, ladite pression de freinage (p-kreis-2) reste, pour la durée du palier temporel (delta-t), sensiblement constante jusqu'à un sixième instant (t6).

9. Système de freinage hydraulique (10) selon la revendication 8, dans lequel
- la commande électronique (ECU) est conçue et programmée pour fournir des signaux de commande (m ... s) servant à réguler l'évolution de la de pression de freinage (p-gesamt), par lesquels
- pendant que la pression de freinage (p-kreis-2) dans un circuit de freinage (II) diminue d'un palier de pression pour tomber à la troisième valeur (p3), la pression de freinage (p-kreis-1) dans l'autre circuit de freinage (I) reste, à partir du huitième instant (t8), sensiblement constante en se maintenant à la valeur de sortie (p4) pour la durée du palier temporel (delta-t),
- la pression de freinage (p-kreis-1) dans l'autre circuit de freinage (I) diminue à un septième instant (t7) d'un palier de pression (delta-p) pour passer à la troisième valeur (p3) qui est atteinte au sixième instant (t6).

10. Système de freinage hydraulique (10) selon la revendication 8 ou 9, dans lequel
- la commande électronique (ECU) est conçue et programmée pour qu'à partir du sixième instant (t6), la phase de diminution et la phase de maintien de la pression continuent à s'alterner entre les deux circuits de freinage (I, II).

11. Système de freinage hydraulique (10) selon l'une des revendications 1 à 10, dans lequel
- la commande électronique (ECU) est conçue et programmée pour fournir des signaux de commande (m ... s) servant à réguler l'évolution de la de pression de freinage (p-gesamt), par lesquels
- en partant d'une première valeur de sortie (p0) à un instant de sortie (t0) dans un des circuits de freinage (I), la pression de freinage (p-kreis-1) augmente d'un palier de pression bas d'introduction (delta-p/2) pour passer à la première valeur (p1) qui est atteinte au premier instant (t1), et,
- une fois cette valeur atteinte, ladite pression de freinage (p-kreis-1) reste, pour la durée du palier temporel (delta-t), sensiblement constante jusqu'au troisième instant (t3).

12. Système de freinage hydraulique (10) selon la revendication 11, dans lequel
- le palier de pression (delta-p) est un multiple, de préférence le double du palier de pression bas d'introduction (delta-p/2).

13. Système de freinage hydraulique (10) selon la revendication 11 ou 12, dans lequel
- la commande électronique (ECU) est conçue et programmée pour fournir des signaux de commande (m ... s) servant à réguler l'évolution de la de pression de freinage (p-gesamt), par lesquels
- au troisième instant (t3), la pression de freinage (p-kreis-1) dans un circuit de freinage (I) augmente d'un palier de pression (delta-p) jusqu'à un instant (t5) pour atteindre une troisième valeur (p3), la différence entre le cinquième et le troisième instant (t5, t3) correspondant sensiblement au palier temporel (delta-t), et le palier de pression (delta-p), sensiblement à un multiple, de préférence au double du palier de pression bas d'introduction (delta-p/2).

14. Système de freinage hydraulique (10) selon l'une des revendications 11 à 13, dans lequel
- la commande électronique (ECU) est conçue et programmée pour fournir des signaux de commande (m ... s) servant à réguler l'évolution de la de pression de freinage (p-gesamt), par lesquels
- pendant que la pression de freinage (p-kreis-1) dans un circuit de freinage (I) augmente d'un palier de pression bas d'introduction (delta-p/2) pour atteindre la première valeur (p1) et est maintenue jusqu'au troisième instant (t3) pour la durée du palier temporel (delta-t),
- la pression de freinage (p-kreis-2) dans l'autre circuit de freinage (II) reste, à partir de l'instant de sortie (t0), sensiblement constante en se maintenant à la valeur de sortie (p0) pour la durée du palier temporel bas d'introduction (delta-t/2) et
- augmente au premier instant (t1) d'un palier (delta-p) pour passer à la seconde valeur (p2) qui est atteinte au troisième instant (t3), la différence entre le troisième et le premier instant (t3, t1) correspondant sensiblement à la durée du palier temporel (delta-t), et
- la pression de freinage (p-kreis-2) dans le second circuit de freinage (II) reste, pour la durée du palier temporel (delta-t), sensiblement constante à partir du troisième instant (t3) et jusqu'au cinquième instant (t5).

15. Système de freinage hydraulique (10) selon l'une des revendications 11 à 14, dans lequel
- la commande électronique (ECU) est conçue et programmée pour qu'à partir du cinquième instant (t5), la phase d'augmentation et la phase de maintien de la pression continuent à s'alterner entre les deux circuits de freinage (I, II).

16. Système de freinage hydraulique (10) selon l'une des revendications 1 à 15, dans lequel
- la commande électronique (ECU) est conçue et programmée pour fournir des signaux de commande (m ... s) servant à réguler l'évolution de la de pression de freinage (p-gesamt), par lesquels
- en partant d'une cinquième valeur de sortie (p5) à un dixième instant (t10) dans un des circuits de freinage (II), la pression de freinage (p-kreis-2) diminue d'un palier de pression bas d'introduction (delta-p/2) pour tomber à une quatrième valeur (p4) qui est atteinte à un neuvième instant (t9), et,
- une fois cette valeur atteinte, ladite pression de freinage (p-kreis-2) reste, pour la durée du palier temporel (delta-t), sensiblement constante jusqu'à un instant (t7).

17. Système de freinage hydraulique (10) selon la revendication 16, dans lequel
- le palier de pression (delta-p) dure un multiple, de préférence le double du palier de pression bas d'introduction (delta-p/2).

18. Système de freinage hydraulique (10) selon la revendication 16 ou 17, dans lequel
- la commande électronique (ECU) est conçue et programmée pour fournir des signaux de commande (m ... s) servant à réguler l'évolution de la de pression de freinage (p-gesamt), par lesquels
- au septième instant (t7), la pression de freinage (p-kreis-2) dans un circuit de freinage (II) diminue d'un palier de pression (delta-p) jusqu'à un cinquième instant (t5) pour tomber à une seconde valeur (p2), la différence entre le septième et le cinquième instant (t7, t5) correspondant sensiblement au palier temporel (delta-t), et le palier de pression (delta-p), sensiblement à un multiple, de préférence au double du palier de pression bas d'introduction (delta-p/2).

19. Système de freinage hydraulique (10) selon l'une des revendications 16 à 18, dans lequel
- la commande électronique (ECU) est conçue et programmée pour fournir des signaux de commande (m ... s) servant à réguler l'évolution de la de pression de freinage (p-gesamt), par lesquels
- pendant que la pression de freinage (p-kreis-2) dans un circuit de freinage (II) diminue d'un palier de pression bas d'introduction (delta-p/2) pour tomber à une quatrième valeur (p4) et est maintenue jusqu'au septième instant (t7) pour la durée d'un palier temporel (delta-t),
- la pression de freinage (p-kreis-1) dans l'autre circuit de freinage (I) reste, à partir de l'instant (t10), sensiblement constante en se maintenant à la cinquième valeur de sortie (p5) pour la durée du palier temporel bas d'introduction (delta-t/2),
- et tombe au neuvième instant (t9) d'un palier de pression (delta-p) à la troisième valeur (p3) qui est atteinte au septième instant (t7), la différence entre le neuvième et le septième instant (t9, t7) correspondant à la durée du palier temporel (delta-t), et,
- au septième instant (t7), la pression de freinage (p-kreis-1) dans l'autre circuit de freinage (I) reste, pour la durée du palier temporel (delta-t), sensiblement constante jusqu'au cinquième instant (t5).

20. Système de freinage hydraulique (10) selon l'une des revendications 16 à 19, dans lequel
- la commande électronique (ECU) est conçue et programmée pour qu'à partir du cinquième instant (t5), la phase de diminution et la phase de maintien de la pression continuent à s'alterner entre les deux circuits de freinage (I, II).
